# EUROPÄISCHE PATENTSCHRIFT

(11) **EP 1 979 411 B1**
(45) Veröffentlichungstag und Bekanntmachung des Hinweises auf die Patenterteilung: **08.07.2009**
(21) Anmeldenummer: 07703968.3
(22) Anmeldetag: 18.01.2007
(51) Int. Cl.: C08L 51/04

(54) **N-BA/ALKEN-COPOLYMERE ALS PFROPFGRUNDLAGE FÜR ABS POLYMERE**
N-BA/ALKENE COPOLYMERS AS A GRAFT BASE FOR ABS POLYMERS
COPOLYMERE N-BA/ALCENE EN TANT QUE BASES GREFFEES POUR POLYMERE ABS

(30) Priorität: 19.01.2006 EP 06100615
(43) Veröffentlichungstag der Anmeldung: 15.10.2008
(73) Patentinhaber: BASF SE, 67056 Ludwigshafen (DE)
(72) Erfinder: ISHAQUE, Michael, 68165 Mannheim (DE); VENKATESH, Rajan, 68167 Mannheim (DE); STALL, Maarten, 68167 Mannheim (DE)
(74) Vertreter: Isenbruck, Günter
(86) Internationale Anmeldenummer: PCT/EP2007/050471
(87) Internationale Veröffentlichungsnummer: WO 2007/082904

(56) Entgegenhaltungen:
- DE-A1- 3 217 438
- DE-A1- 10 216 071
- US-A1- 2004 054 078
- US-A1- 2005 245 645

## Beschreibung

Die vorliegende Erfindung betrifft Formmassen mit sehr guter Witterungsbeständigkeit, verbesserter Chemikalienbeständigkeit und verbesserter Tieftemperaturzähigkeit. Die erfindungsgemäßen Formmassen basieren auf Kautschukmodifizierern aus kostengünstigen und sehr gut verfügbaren Monomeren und zeigen ein ausgewogenes Verhältnis aus Zähigkeit und Steifigkeit bei gleichzeitig guter Fließfähigkeit. Die erfindungsgemäßen Formmassen enthalten
A 10 bis 80 Gew.-% des Pfropfcopolymers A aus
   a1 30 bis 90 Gew.-% bezogen auf das Pfropfcopolyer A der Pfropfgrundlage a1 auf Basis eines vernetzten Copolymers aus Alkylacrylat und einem Olefin und
   a2 10 bis 70 Gew.-% bezogen auf das Pfropfcopolyer A der Pfropfauflage a2 und
B 20 bis 90 Gew.-% eines thermoplastischen Copolymers

Darüber hinaus betrifft die vorliegende Erfindung die Verwendung der oben beschriebenen Formmassen zur Herstellung von Formkörpern, Halbzeugen, Fasern, Folien oder Schäumen sowie Formkörper, Halbzeuge, Fasern, Folien oder Schäume, hergestellt aus den erfindungsgemäßen thermoplastischen Formmassen.

Aus kautschukmodifizierten Polymeren werden verschiedenste Gebrauchsgegenstände hergestellt, da sie sehr gute mechanische Eigenschaften besitzen. Insbesondere werden zur Modifizierung Kautschuke auf Basis vernetzter Polyacrylate verwendet, da diese sich auf Grund ihres gesättigten Charakters durch hohe Witterungsbeständigkeit auszeichnen.

Kautschuke mit sehr guter Witterungsbeständigkeit sind bekannt und werden als Schlagzähmodifizierer in einer polymeren Matrix eingesetzt, insbesondere in Außenanwendungen. So offenbart die WO 05/12395 eine mit Acrylatkautschuk modifizierte Formmasse mit guten Schlag und Zugfestigkeiten. In der US 5,773,520 werden schlagzähmodifizierte Thermoplastmischungen mit verbesserten mechanischen Eigenschaften bei tiefen Temperaturen offenbart, wobei Styrol(co)polymere jedoch nicht beschrieben werden.

In der DE 11 64 080 werden derartige kautschukmodifizierte, schlagzähe Thermoplaste mit guter Witterungsbeständigkeit aus vernetzten Polyacrylaten und einer spröden Komponente wie zum Beispiel Polystyrol oder Polymethylmethacrylat dargestellt.

DE 195 08 312 und EP 0 675 164 beschreiben witterungsbeständige thermoplastische Formmassen, in denen Pfropfcopolymerisate mit einem Kern aus vernetztem Polyacrylat, das mit anderen Monomeren wie beispielsweise Isopren, Butadien, Acrylnitril oder Styrol copolymerisiert wurde, und einer Hülle aus einem spröden Copolymer wie Poly-(styrolacrylnitril) als Schlägzähigkeitsmodifizierer eingesetzt werden.

DE 199 59 420 zeigt die Verwendung von Elastomeren mit einer Glasübergangstemperatur T_{G} < 10 °C auf der Basis von Acrylaten, Ethylen, Propylen, Dienen oder Siloxanen als Pfropfgrundlage für Schlägzähigkeitsmodifizierer in Formmassen, die Polycarbonat und Styrolcopolymere enthalten.

Wegen der vielseitigen Verwendungsmöglichkeiten, der guten mechanischen Eigenschaften und hohen Witterungsbeständigkeit von Thermoplasten, die mit vernetzten Polyacrylaten modifiziert sind, ist eine kostengünstige Alternative zur Herstellung solcher thermoplastischen Formmassen wünschenswert. Dabei sollten die Formmassen verbesserte Tieftemperatureigenschaften, verbesserte Eigenfarbe und Chemikalienbeständigkeit aufweisen. Diese thermoplastischen Formmassen sollen überdies ein ausgewogenes Verhältnis aus Zähigkeit und Steifigkeit bei gleichzeitig guter Fließfähigkeit und Witterungsbeständigkeit zeigen.

Aufgabe der vorliegenden Erfindung war, einen kostengünstigen Kautschuk für die Zähmodifizierung von Styrol(co)polymeren bereitzustellen, der sich durch verbesserte Tieftemperatureigenschaften, verbesserte Eigenfarbe und Chemikalienbeständigkeit auszeichnet und dabei die Witterungsbeständigkeit und das Zähigkeits-Steifigkeitsverhältnis nicht nachteilig beeinflusst und durch ein einfaches Herstellungsverfahren zugänglich ist.

Demgemäß wurden thermoplastische Formmassen gefunden, die ein Pfropfcopolymer A und ein thermoplastisches Copolymer B in folgenden Gewichtsanteilen enthalten:
A: 10 bis 80 Gew.-% des Pfropfcopolymers A aus
   a1: 30 bis 90 Gew.-%, bezogen auf das Pfropfcopolymer A einer Pfropfgrundlage a1, erhältlich durch die Umsetzung von
      a11: 50 bis 98,99 Gew.-%, bezogen auf die Pfropfgrundlage a1 eines C₁- bis C₁₀ - Alkylesters der Acrylsäure,
      a12: 1 bis 49,99 Gew.-%, bezogen auf die Pfropfgrundlage a1 eines copolymerisierbaren, linearen, verzweigten oder cyclischen Olefins mit 3, 4 oder 5 bis 12 C-Atomen und
      a13: 0,01 bis 10 Gew.-%, bezogen auf die Pfropfgrundlage a1 einer copolymerisierbaren, polyfunktionellen, vernetzend wirkenden Verbindung,
      wobei die Gesamtsumme aus a11, a12 und a13 100 Gew.-% ergibt, und
   a2: 10 bis 70 Gew.-%, bezogen auf das Pfropfcopolymer A einer Pfropfauflage a2;
      wobei die Gesamtsumme aus Pfropfgrundlage a1 und Pfropfauflage a2 100 Gew.-% ergibt; und
B: 20 bis 90 Gew.-% eines thermoplastischen Copolymers,
wobei die Gesamtsumme aus Pfropfcopolymer A und thermoplastischem Copolymer B 100 Gew.-% ergibt.

Eine Ausführungsform bezieht sich auf die vorstehend beschriebenen, thermoplastischen Formmassen, wobei als Komponente a12 copolymerisierbare, lineare, verzweigte oder cyclische α-Olefine mit 2 bis 12 C-Atomen eingesetzt werden.

Eine weitere Ausführungsform beinhaltet die vorstehend beschriebene Formmasse, in der als Komponente a12 ein copolymerisierbares lineares, verzweigtes oder cyclisches α-Olefin mit 3, 4 oder 5 bis 12 C-Atomen eingesetzt wird.

Weiterhin betrifft die vorliegende Erfindung neuartige Emulsions-Kautschuke auf Basis von Copolymeren aus Acrylaten und Alkenen für den Einsatz als Zähmodifizierer.

Des Weiteren wurde die Verwendung der oben beschriebenen Formmassen zur Herstellung von Formkörpern, Halbzeugen, Fasern, Folien oder Schäumen gefunden, sowie die Formkörper, Halbzeuge, Fasern, Folien oder Schäume, hergestellt aus den erfindungsgemäßen thermoplastischen Formassen, gefunden.

Die erfindungsgemäßen Formmassen können neben dem Pfropfcopolymer A und dem thermoplastischen Copolymer B ein oder mehrere weitere Polymere C enthalten. Es können der Formmasse auch faser- oder teilchenförmige Füllstoffe D zugegeben werden. Optional können auch übliche Zusatzstoffe und Verarbeitungshilfsmittel E zugesetzt werden. Die erfindungsgemäßen Formmassen können die Komponenten C, D und/oder E in den folgenden Gewichtsanteilen enthalten (die Gew.-% beziehen sich jeweils auf das Gesamtgewicht der Komponenten A und B):
0 bis 90 Gew.-% ein oder mehrere weitere thermoplastische Polymere C
0 bis 50 Gew.-% faser- oder teilchenförmige Füllstoffe oder deren Mischungen D
0 bis 30 Gew.-% übliche Zusatzstoffe und Verarbeitungshilfsmittel E

Das Pfropfcopolymer A ist mit 10 bis 80 Gew.-% , bevorzugt 20 bis 70 Gew.-%, besonders bevorzugt 25 bis 60 Gew.-% in der Formmasse enthalten. (Die Gew.-% beziehen sich jeweils auf das Gesamtgewicht der Komponenten A und B.)

Das thermoplastische Copolymer B ist mit 20 bis 90 Gew.-%, bevorzugt 30 bis 80 Gew.-%, besonders bevorzugt 40 bis 75 Gew.-% in der Formmasse enthalten. (Die Gew.-% beziehen sich ebenfalls jeweils auf das Gesamtgewicht der Komponenten A und B.)

Die erfindungsgemäßen Gegenstände und Verwendungen werden im Folgenden beschrieben:

### Komponente A (Pfropfcopolymer)

Das Pfropfcopolymer A besteht zu 30 bis 90 Gew.-%, bevorzugt zu 40 bis 80 Gew.-%, besonders bevorzugt zu 45 bis 70 Gew.-% aus der Pfropfgrundlage a1 und zu 10 bis 70 Gew.-%, bevorzugt 20 bis 60 Gew.-%, besonders bevorzugt zu 30 bis 55 Gew.-% aus der Pfropfauflage a2 (die Gew.-% sind jeweils bezogen auf das Gewicht der Komponente A).

Die Pfropfgrundlage a1 ist erhältlich durch Umsetzung von
50 bis 98,99 Gew.-%, bevorzugt 70 bis 98,75 Gew.-%, besonders bevorzugt 85 bis 98,7 Gew.-% der Komponente a11, und
1 bis 49,99 Gew.-%, bevorzugt 2 bis 45 Gew.-%, besonders bevorzugt 5 bis 40 Gew.-% der Komponente a12, und
0,01 bis 10 Gew-% der Komponente a13.

Die Gew.-% beziehen sich auf die Pfropfgrundlage a1.

Die Pfropfauflage a2 ist erhältlich durch Umsetzung von
60 bis 95 Gew.-%, bevorzugt 65 bis 80 Gew.-%, besonders bevorzugt 70 bis 75 Gew.-% der Komponente a21, und
5 bis 40 Gew.-%, bevorzugt 20 bis 35 Gew.-%, besonders bevorzugt 25 bis 30 Gew.-% der Komponente a22 und
0 bis 35 Gew.-%, bevorzugt 0 bis 15 Gew.-%, besonders bevorzugt 0 bis 5 Gew.-% der Komponente a23
in Gegenwart der Pfropfgrundlage a1. Die Gew.-% sind jeweils bezogen auf das Gewicht der Komponente a2.

Als Komponente a11 können erfindungsgemäß Monomere wie ein oder mehrere C₁-C₁₀-Alkylester der Acrylsäure verwendet werden. Bevorzugte Komponenten a11 sind Methylacrylat, n-Butylacrylat, tert-Butylacrylat, Hexylacrylat, 2-Ethylhexylacrylat oder Octylacrylat oder deren Mischungen, insbesondere n-Butylacrylat oder 2-Ethylhexylacrylat oder deren Mischungen.

Besonders bevorzugt als Komponente a11 sind n-Butylacrylat und Ethylhexylacrylat.

Als Komponente a12 können Monomere wie alle linearen, verzweigten oder cyclischen 3, 4 oder 5 bis 12 C-Atome aufweisenden Alkene eingesetzt werden, welche sich radikalisch copolymerisieren lassen und welche neben Kohlenstoff und Wasserstoff keine weiteren Elemente aufweisen. Hierzu zählen beispielsweise die acyclischen Alkene Buten-2, 2-Methylpropen, 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Pentan-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethyl-hexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1,3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methyl-undecen-2, 5-Methylundecen-2, 6-Methylundecen-2, 7-Methylundecen-2, 8-Methyl-undecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methyl-undecen-4, 6-Methylundecen-4, 7-Methylundecen-4, 8-Methylundecen-4, 9-Methyl-undecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Dodecen-4, Dodecen-5 oder Dodecen-6 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methylcyclohexen-1, 3-Methyl-cyclohexen-1, 4-Methylcyclohexen-1, 1,4-Dimethylcyclohexen-1, 3,3,5-Trimethylcyclo-hexen-1, 4-Cyclopentylcyclohexen-1, Vinylcyclohexan, Cyclohepten, 1,2-Dimethyl-cyclohepten-1, Cycloocten, 2-Methylcycloocten-1, 3-Methylcycloocten-1, 4-Methyl-cycloocten-1, 5-Methylcycloocten-1, Cyclononen, Cyclodecen, Cycloundecen, Cyclo-dodecen, Bicyclo[2.2.1]hepten-2, 5-Ethylbicyclo[2.2.1]hepten-2, 2-Methylbicyclo[2.2.2]octen-2, Bicyclo[3.3.1]nonen-2 oder Bicyclo[3.2.2]nonen-6.

Bevorzugt werden α-Olefine mit 3, 4 und 5 bis 12 C-Atomen eingesetzt, beispielsweise Propen, Buten-1, Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1 oder 2-Methylocten-1. Selbstverständlich können auch Gemische der vorgenannten Komponenten a12 eingesetzt werden.

Bevorzugt werden Propylen, n-Buten, iso-Buten, Penten-1, Hexen-1, Hepten-1 und Octen-1 als Komponente a12 verwendet.

Besonders bevorzugt ist der Einsatz von Propylen, Buten-1 und iso-Buten als Komponente a12.

Als Komponente a13 können prinzipiell alle vernetzend wirkenden Monomere eingesetzt werden. Polyfunktionelle, vernetzende Monomere sind beispielsweise Di- und Trivinylbenzol, Diethylphtalat, Triallylcyanurat, Triallylisocyanurat, Dihydrodicyclopentadienylacrylat, Triallylphosphat, Allylester gesättigter und ungesättigter Carbonsäuren wie Mono- und Diallylmaleat, Mono- und Diallylfumarat, Mono- und Diallylitaconat, Diallylphtalat, Allylacrylat und Allylmethacrylat und Diene wie Butadien und Isopren.

Als Komponente a21 werden Monomere wie Styrol und Styrolderivate wie mit 1 bis 8 C-Atome enthaltenden Alkylgruppen substituierte Styrole, beispielsweise α-Methylstyrol und Vinyltoluole wie p-Methylstyrol oder Mischungen dieser Monomere eingesetzt, bevorzugt ist Styrol

Als Komponente a22 werden Monomere wie ungesättigte Nitrile, z.B. Acrylnitril und Methacrylnitril, bevorzugt Acrylnitril verwendet.

Als Komponente a23 sind prinzipiell alle von den unter Komponenten a21 und a22 beschriebenen, verschiedenen, ungesättigten Monomere einsetzbar. Geeignet sind beispielsweise die in a11 genannten monoethylenisch ungesättigen Monomere; vinylaromatische Monomere wie Styrolderivate, Methacrylnitril, Glycidylester, Glycidylacrylat und - methacrylat; N-substituierte Maleinimide wie N-Methyl-, N-Vinyl- und N-Cyclohexylmaleinimid; Acrylsäure, Methacrylsäure; weiterhin Dicarbonsäuren wie Maleinsäure; stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin; aromatische und araliphatische Ester der Acrylsäure und Methacrylsäure wie Vinylacrylat, Vinylmethacrylat, Benzylacrylat, Benzylmethacrylat, 2-Phenylethylacrylat, 2-Phenylethylmethacrylat, 2-Phenoxyethylacrylat, 2-Phenoxyethylmethacrylat, 2-Vinylethylacrylat, 2-Vinylmethylacrylat, 2-Vinoxyethylacrylat und 2-Vinoxyethylmethacrylat; ungesättige Ether wie Vinylmethylether, sowie Mischungen aus 2 oder mehr dieser Monomeren. Bevorzugt sind Methylacrylat, Glycidylacrylat oder-methacrylat.

Neben diesen monoethylenisch ungesättigten Monomeren sind als Komponente a23 aber auch vernetzende und/oder pfropfaktiv wirkende Monomere geeignet, die 2 oder mehr zur Copolymerisation befähigte Doppelbindungen enthalten. Geeignet sind beispielsweise die als Komponente a13 beschriebenen Verbindungen, aber auch andere dem Fachmann bekannte oder in der Literatur beschriebene Vernetzer bzw. pfropfaktive Verbindungen, beispielsweise Diene wie Butadien oder Isopren, (Meth)acrylester höherwertiger Alkohole wie Polyethylenglykoldimethacrylat.

Diese im vorherigen Absatz beschriebenen Vernetzer bzw. pfropfaktiven Verbindungen können in der Regel in Mengen von 0 bis 10 Gew.-%, bevorzugt von 0 bis 5 Gew.-%, jeweils bezogen auf das Gesamtgewicht der Komponente a22, als Komponente a23 eingesetzt werden. In einer besonders bevorzugten Ausführungsform der Erfindung enthält Komponente a23 aber keine als Vernetzungs- und/oder Pfropfagenz wirkenden Verbindungen.

Geeignete Herstellungsverfahren für die Pfropfcopolymerisate A sind die Emulsions-, Lösungs-, Masse- oder Suspensionspolymerisation. Bevorzugt werden die Pfropfcopolymerisate A durch wässrige radikalische Emulsionspolymerisation hergestellt.

Geeignete Polymerisationsverfahren sind beschrieben in den WO 02/10222, DE-A 28 26 925, 31 49 358 und in der DE-C 12 60 135.

Die Darstellung der Pfropfgrundlage erfolgt bevorzugt nach dem in der nicht veröffentlichten, dem Amt bekannten Anmeldung mit der Nr. 102005055537.3 beschriebenen Verfahren. Die radikalisch initiierte wässrige Emulsionspolymerisation kann durchgeführt werden, indem wenigstens eine Teilmenge der Monomeren a11 bis a13 in dem wässrigen Reaktionsmedium vorgelegt wird und die gegebenenfalls verbliebene Restmenge dem wässrigen Reaktionsmedium nach Initiierung der radikalischen Polymerisationsreaktion zugegeben wird. Es ist aber auch möglich, im wässrigen Reaktionsmedium wenigstens eine Teilmenge des radikalischen Polymerisationsinitiators vorzulegen, das erhaltene wässrige Reaktionsmedium auf Polymerisationstemperatur aufzuheizen und bei dieser Temperatur die Monomeren a11 bis a13 dem wässrigen Reaktionsmedium zuzugeben. Insbesondere vorteilhaft werden die Monomere a11 bis a13 dem wässrigen Reaktionsmedium in Form einer Mischung zugegeben. Ganz besonders bevorzugt erfolgt die Zugabe der Monomeren a11 bis a13 in Form einer wässrigen Monomeremulsion.

Die Reaktion wird durch wasserlösliche oder öllösliche radikalische Polymerisationsinitiatoren wie anorganische oder organische Peroxide, z.B. Peroxodisulfat oder Benzylperoxid sowie Azoverbindungen wie beispielsweise 2,2'-Azobis(isobutylnitril) oder mit Hilfe von Redoxinitiatoren gestartet. Redoxinitiatoren eignen sich auch zur Polymerisation unterhalb von 20 Grad.

In der Regel beträgt die Menge des eingesetzten Radikalinitiators, bezogen auf die Monomergesamtmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Reaktionsmedium vorgelegt werden. Es ist aber auch möglich, gegebenenfalls lediglich eine Teilmenge des Radikalinitiators im wässrigen Reaktionsmedium vorzulegen und dann während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Im Rahmen des beschriebenen Verfahrens werden Dispergiermittel verwendet, die sowohl die Monomertröpfchen wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolyermisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropan-sulfonsäure und/oder 4-Styrolsulfonsäure enthaltende Copolymerisate und deren Alkalimetallsalze, aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, aminogruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel jedoch insbesondere Emulgatoren eingesetzt.

Als geeignete Emulgatoren können anionische, kationische oder nicht-ionische Tenside verwendet werden.

Gebräuchliche nicht-ionische Emulgatoren sind beispielsweise oxylierte Mono-, Di- und Trialkylphenole sowie ethoxylierte Fettalkohole.

Übliche anionische Emulgatoren sind zum Beispiel Alkalimetall- und Ammoniumsalze von Alkylsulfaten (Alkylrest: C₈-C₁₂), von Schwefelsäurehalbestern ethoxylierter Alkanole (Alkylrest: C₁₂-C₁₈) und ethoxylierter Alkylphenole (Alkylreste: C₄-C₁₂) und von Alkylsulfonsäuren (Alkylrest: C₁₂-C₁₈).

Geeignete kationische Emulgatoren sind in der Regel C₆-C₁₈-Alkyl-, Alkylaryl- oder heterocyclische Reste aufweisende, primäre, sekundäre, tertiäre oder quartäre Ammoniumsalze, Pyridiniumsalze, Imidazoliniumsalze, Oxozoliniumsalze, Morpholiniumsalze, Tropyliumsalze, Sulfoniumsalze und Phosphoniumsalze. Beispielhaft seien Dodecylammoniumacetat oder das entsprechende Sulfat, Disulfate oder Acetate der verschiedenen 2-(N,N,N-Trimethylammonium)ethylparaffinsäureester, N-Cetylpyridiniumsulfat und N-Laurylpyridiniumsulfat genannt.

Die Emulgatoren und Schutzkolloide können auch als Mischungen eingesetzt werden.

Die als Dispergiermittel bevorzugt eingesetzten Emulgatoren werden vorteilhaft in einer Gesamtmenge von 0,005 bis 10 Gew.-%, vorzugsweise von 0,01 bis 5 Gew.-%, insbesondere von 0,1 bis 3 Gew.-%, jeweils bezogen auf die Monomer-Gesamtkonzentration, eingesetzt.

Die Gesamtmenge der als Dispergiermittel zusätzlich oder statt der Emulgatoren eingesetzten Schutzkolloide beträgt oft 0,1 bis 10 Gew.-% und häufig 0,2 bis 7 Gew.-%, jeweils bezogen auf die Monomeren-Gesamtkonzentration.

Bevorzugt werden jedoch anionische und/oder nicht-ionische Emulgatoren und insbesondere bevorzugt anionische Emulgatoren als Dispergiermittel eingesetzt.

Als weitere Polymerisationshilfsstoffe können die üblichen Puffersubstanzen, durch welche pH-Werte von vorzugsweise 6 - 9 eingestellt werden, wie Natriumbicarbonat und Natriumpyrophosphat, sowie 0 - 3 Gew.-% eines Molekulargewichtsreglers, wie Mercaptane, Terpinole oder dimeres α-Methylstyrol, bei der Polymeristaiton verwendet werden.

Die Reaktion kann im Bereich von 0 bis 170°C durchgeführt werden. In der Regel werden Temperaturen zwischen 40 und 120°C, häufig zwischen 50 bis 110°C und oft zwischen 60 bis 100°C angewendet.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,03 bis 2 Gew.-% und oft von 0,04 bis 1,5 Gew.-% einer Polymersaat, jeweils bezogen auf die Monomer-Gesamtmenge, erfolgen.

Eine Polymersaat wird insbesondere dann eingesetzt, wenn die Teilchengröße der mittels radikalisch wässriger Emulsionspolymerisation herzustellenden Polymerpartikel gezielt eingestellt werden soll, wie in der US-A 2,520,959 und der US-A 3,397,165 beschrieben wird.

Die auf die vorstehend beschriebene Weise hergestellten Copolymere eignen sich als Pfropfgrundlage für die Herstellung von Pfropfcopolymer, die als Schlagzähmodifizierer von Thermoplasten eingesetzt werden können, insbesondere die mittels Emulsionspolymerisation auf Basis von Acrylaten und Alkenen hergestellten Emulsions-Kautschuke.

Die Pfropfauflage a2 wird vorzugsweise durch Emulsionspolymerisationsverfahren aufgepfropft. Die Pfropfauflage wird in Gegenwart des nach den oben beschriebenen Verfahren erhaltenen Latex (aus der Pfropfgrundlage a1) gemäß einer Ausführungsform der Erfindung aus einem Monomergemisch, enthaltend die Komponenten a21, a22 und gegebenenfalls a23, polymerisiert. Dabei können die Monomere a21, a22 und gegebenenfalls a23 einzeln oder in Mischungen miteinander zugefügt werden. Beispielsweise kann man zunächst Styrol allein, und danach eine Mischung aus Styrol und Acrylnitril aufpfropfen. Es ist vorteilhaft, diese Pfropfcopolymerisation wieder in wässriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage a1, wobei, falls nötig, weiterer Emulgator und Initiator sowie Hilfsstoff zugegeben werden kann. Das gemäß einer Ausführungsform der Erfindung aufzupfropfende Monomergemisch kann dem Reaktionsgemisch auf einmal, verteilt auf mehreren Stufen - beispielsweise zum Aufbau mehrerer Pfropfauflagen - oder vorzugsweise kontinuierlich während der Polymerisation zugegeben werden. Die Pfropfcopolymerisation des Gemischs der Komponenten a21, a22 und gegebenenfalls a23 in Gegenwart der Pfropfgrundlage a1 wird so durchgeführt, dass ein Pfropfungsgrad von 10 bis 70 Gew.-%, vorzugsweise 20 bis 60 Gew.-%, insbesondere 30 bis 55 Gew.-%, bezogen auf das Gesamtgewicht der Komponente A, im Pfropfcopolymerisat A resultiert. Da die Propfausbeute bei der Pfropfcopolymerisation im Allgemeinen nicht 100 % beträgt, sollte eine etwas größere Menge des Monomergemischs aus a21, a22 und gegebenenfalls a23 bei der Pfropfcopolymerisation eingesetzt werden, als es dem gewünschten Pfropfgrad entspricht. Die Steuerung der Pfropfausbeute bei der Pfropfpolymerisation und somit des Pfropfgrades des fertigen Pfropfcopolymerisats A ist dem Fachmann geläufig und kann beispielsweise unter anderem durch die Dosiergeschwindigkeit der Monomeren oder durch Reglerzugabe erfolgen. Die Bestimmung des Pfropfgrades ist beispielsweise in der US 2004/0006178 oder in der EP 1 031 609 beschrieben.

Zwischen der Herstellung der Pfropfgrundlage und dem Aufbringen der Pfropfauflage kann ein Agglomerationsschritt durchgeführt werden, um Teilchengrößen und Teilchengrößenverteilungen gezielt einzustellen. Die Verfahren zur teilweisen oder vollständigen Agglomeration der Pfropfgrundlage a1 sind dem Fachmann bekannt und die Agglomeration kann nach dem Fachmann an sich bekannten Methoden vorgenommen werden. So können physikalische Agglomerationsverfahren wie Gefrier- oder Druckagglomerationsverfahren verwendet werden, es können aber auch chemische Methoden eingesetzt werden. Zu letzteren gehört die Zugabe von Elektrolyten oder von anorganischen oder organischen Säuren. Bevorzugt wird die Agglomeration mittels eines Agglomerationspolymerisats vorgenommen. Als solche sind beispielsweise Polyethylenoxidpolymere, Polyvinylether oder Polyvinylalkohol zu nennen.

Die Pfropfcopolymerisate A haben üblicherweise eine mittlere Teilchengröße d₅₀ von 50 - 1200 nm, bevorzugt von 50 - 1000 nm und besonders bevorzugt von 50 - 850 nm. Diese Teilchengrößen können erzielt werden, indem man als Pfropfgrundlage a1 Teilchengrößen von 50 - 1000 nm, bevorzugt 50 - 700 nm und besonders bevorzugt von 50 - 600 nm verwendet. Die Teilchengrößenverteilung kann mono-, bi- oder multimodal sein. Gemäß einer besonders bevorzugten Ausführungsform der Erfindung ist die Teilchengrößenverteilung monomodal. Gemäß einer weiteren Ausführungsform ist die Teilchengrößenverteilung der Komponente A bimodal, wobei 60 - 90 Gew.-% eine mittlere Teilchengröße von 50 - 200 nm und 10 - 40 Gew.-% eine mittlere Teilchengröße von 200 - 850 nm aufweisen, bezogen auf das Gesamtgewicht der Pfropfcopolymers A.

Als mittlere Teilchengrößen bzw. Teilchengrößenverteilungen werden die aus der integralen Massenverteilung bestimmten Größen angegeben. Bei diesen und den weiteren im Rahmen der vorliegenden Erfindung angegebenen Teilchengrößen handelt es sich in allen Fällen um das Gewichtsmittel der Teilchengrößen, wie sie mittels einer analytischen Ultrazentrifuge entsprechend der Methode nach W. Scholtan und H. Lange, kolloid.-Z. und Z.-Polymere 250 (1972), Seiten 782 - 796, bestimmt wurden.

Unter Pfropfcopolymerisat soll hier auch eine Mischung unterschiedlicher Pfropfkautschuke verstanden werden. So kann beispielsweise zu der wässrigen Reaktionsmischung eines Pfropfkautschuks die Lösung, Suspension oder Emulsion eines oder mehrerer weiterer Pfropfkautschuke zugegeben werden. Die Mischung dieser Pfropfkautschuke kann anschließend isoliert werden. Besonders bevorzugt wird ein Pfropfkautschuk aus seiner Reaktionsmischung isoliert.

Die erfindungsgemäßen Pfropfcopolymerisate A können so weiter verwendet werden, wie sie in der Reaktionsmischung anfallen, beispielsweise als Latexemulsion oder -dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt. Dazu zählt zum Beispiel, dass die Pfropfcopolymerisate A aus der Reaktionsmischung isoliert werden, zum Beispiel durch Sprühtrocknung, Scherung oder durch Fällen mit starken Säuren oder mittels Nukliierungsmitteln, z. B. aus anorganischen Verbindungen wie Magnesiumsulfat und gegebenenfalls das Trocknen des isolierten Kautschuks.

Die erfindungsgemäßen Pfropfcopolymere sind für die Schlagzähmodifizierung von Thermoplasten geeignet. Durch Mischen mit thermoplastischen Polymeren lassen sich schlagzähmodifizierte Thermoplasten und thermoplastische Formmassen herstellen.

### Komponente B (thermoplastisches Copolymer)

Bevorzugte Komponente B ist Polystyrol, Polystyrol-Acrylnitril, Poly-α-Methylstyrol-Acrynitril oder deren Mischungen. Bevorzugt sind dabei Copolymere B mit Molmassen M_{w} von 60.000 bis 300.000 g/mol, die Molmassen können durch Lichtstreuung in Dimethylformamid bestimmt werden. In einer bevorzugten Ausführungsform der Erfindung wird die Komponente B nach der Herstellung nach dem Fachmann bekannten Verfahren isoliert und vorzugsweise zu Granulat verarbeitet.

### Komponente C

Als weitere thermoplastische Polymere C können insbesondere teilkristalline Polyamide, teilaromatische Copolyamide, Polyester, Polyoxyalkylen, Polyarylensulfide, Polyetherketon, Polyvinylchloride und/oder Polycarbonate, bevorzugt auf Bisphenol-A basierende Polycarbonate, verwendet werden. Bevorzugtes weiteres Polymer C ist Polyamid. Es können aber auch Mischungen aus zwei oder mehreren der genannten Polymere C eingesetzt werden. Die erfindungsgemäßen thermoplastischen Formmassen können, bezogen auf die Komponenten A plus B, 0 bis 90 Gew.-%, bevorzugt 0 bis 50 Gew.-%, bevorzugt 0 bis 20 Gew.-% des Polymers C enthalten.

### Komponente D

Als Komponente D können die erfindungsgemäßen thermoplastischen Formmassen 0 bis 50 Gew.-%, vorzugsweise 0 bis 40 Gew.-%, insbesondere 0 bis 30 Gew.-% faser- oder teilchenförmige Füllstoffe oder deren Mischungen enthalten, jeweils bezogen auf die Menge der Komponenten A plus B.

Beispielsweise können als Füll- oder Verstärkungsstoffe Glasfasern, die mit einer Schlichte und einem Haftvermittler ausgerüstet sein können; Glaskugeln, Mineralfasern, Aluminiumoxidfasern, Glimmer, Quarzmehl oder Wollastonit zugesetzt werden.

Außerdem können Metallflocken, Metallpulver, Metallfasern, metallbeschichtete Füllstoffe, zum Beispiel nickelbeschichtete Glasfasern sowie andere Zuschlagstoffe, die elektromagnetische Wellen abschirmen, den erfindungsgemäßen Formmassen beigemischt werden. Zusätzlich können Kohlenstofffasern, Ruß, insbesondere Leitfähigkeitsruß oder nickelbeschichtete C-Fasern zugesetzt werden.

### Komponente E

Den erfindungsgemäßen Formmassen können Hilfs- und Verarbeitungszusatzstoffe E in Mengen von 0 bis 50 Gew.-%, bevorzugt 0 bis 40 Gew.-%, zugesetzt werden. Als übliche Zusatzstoffe E kommen alle solche Substanzen in Betracht, die üblicherweise zur Verarbeitung oder Ausrüstung der Polymere zum Einsatz kommen. Genannt seien beispielsweise: Farbstoffe, Pigmente, Färbemittel, Antistatika, Antioxidantien, Stabilisatoren zur Verbesserung der Thermostabilität, Stabilisatoren zur Erhöhung der Lichtstabilität, Stabilisatoren zum Anheben der Hydrolysebeständigkeit und der Chemikalienbeständigkeit, Mittel gegen die Wärmezersetzung und insbesondere Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen.

### Formmassen

Die Herstellung der erfindungsgemäßen Formmassen aus den Komponenten A, B und gewünschtenfalls den weiteren Polymeren C, faser- oder teilchenförmigen Füllstoffen D sowie üblichen Zusatzstoffen und Verarbeitungshilfsmitteln E kann nach jeder beliebigen Weise nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten. Dies wird bei Temperaturen im Bereich von 160 bis 400 °C, bevorzugt von 180 bis 280 °C durchgeführt. In einer bevorzugten Ausführungsform werden die Komponenten zuvor aus den bei den jeweiligen Herstellungsschritten erhaltenen Lösungen bzw. wässrigen Dispersionen/Emulsionen teilweise oder vollständig isoliert. Beispielsweise können die Pfropfcopolymerisate A als feuchte oder trockene Krümel/Pulver mit einem Granulat des thermoplastischen Copolymers B vermischt werden.

Gegenstand der Erfindung ist auch die Verwendung der beschriebenen Formmassen zur Herstellung von Formteilen wie Platten oder Halbzeugen, Folien, Fasern oder auch von Schäumen sowie die entsprechenden Platten, Halbzeugen, Folien, Fasern oder Schäume. Die Verarbeitung kann mittels der bekannten Verfahren der Thermoplastverarbeitung durchgeführt werden, insbesondere kann die Herstellung durch Thermoformen, Extrudieren, Spritzgießen, Kalandrieren, Hohlkörperblasen, Pressen, Presssintern, Tiefziehen oder Sintern, vorzugsweise durch Spritzgießen erfolgen.

Durch den Ersatz einer Teilmenge der Acrylmonomere beim Aufbau der Pfropfgrundlage durch kostengünstig erhältliche Olefine wird ein deutlicher Kostenvorteil erzielt.

Überraschend wurde eine gegenüber den herkömmlich verwendeten ABS-Polymeren erhöhte Chemikalienbeständigkeit der erfindungsgemäßen Formmassen gefunden.

Des Weiteren wurde für die erfindungsgemäßen Formmassen überraschenderweise eine verbesserte Tieftemperaturzähigkeit gefunden, beispielsweise ist für 1-Octen als Komponente a2 unerwarteter Weise die Glasübergangstemperatur T_{G} der Pfropfgrundlage gegenüber T_{G} der reinen Polymere Poly-n-butylacrylat (T_{G} = -44 bis -46 °C) und Poly-1-octen (T_{G}: -44 °C) erniedrigt und liegt bei -50 bis -52 °C.

Darüber hinaus weisen die erfindungsgemäßen Thermoplasten überraschenderweise eine hellere Eigenfarbe auf, die für die weitere Verwendung deutliche Vorteile besitzt, da z. B. weniger Farbmittel zur Einfärbung verwendet werden müssen.

Die Einführung der Olefine in die Pfropfgrundlage verändert die mechanischen Eigenschaften und Witterungsbeständigkeit der thermoplastischen Formmassen nicht nachteilig.

Es wurde beispielhaft eine thermoplastische Formmasse, enthaltend ein Pfropfcopolymer A auf einer erfindungsgemäßen Pfropfgrundlage und ein thermoplastisches Copolymer B hergestellt und mit einer thermoplastischen Formmasse verglichen, enthaltend neben einem thermoplastischen Copolymer B ein Pfropfcopolymer A auf einer Pfropfgrundlage nach dem Stand der Technik, ohne Gehalt an Olefinen. Der Vergleich zeigte, dass die Eigenfärbung der erfindungsgemäßen Formmassen besser war (niedrigerer Gelbwert), ohne dass die mechanischen Eigenschaften verschlechtert gewesen wären.

### Beispiele:

Es wurde zunächst ein Pfropfcopolymer A auf einer erfindungsgemäßen Pfropfgrundlage a1 hergestellt, indem als Komponente a11 n-Butylacrylat, als Komponente a12 1-Octen und als Komponente a13 Allylmethacrylat eingesetzt wurde:

### Beispiel: Herstellung der Pfropfgrundlage a1

In einem 10 I-Vierhalskolben, ausgerüstet mit einem Anker-Rührer, Rückflusskühler und zwei Dosiereinrichtungen wurden unter Stickstoffatmosphäre 900 g entionisiertes Wasser, 23,9 g einer wässrigen n-Butylacrylatsaat (Feststoffgehalt 39,5 Gew.-%, zahlenmittlerer Teilchendurchmesser 85 nm), 283,5 g I-Octen (Komponente a12) und 1,89 g Natriumpersulfat vorgelegt und unter Rühren auf 60 °C aufgeheizt. Beginnend bei 60 °C wurde der Monomerzulauf, bestehend aus 1685 g entionisiertem Wasser, 14,18 g einer 40 gew.-%igen wässrigen Lösung eines Emulgators aus einem Gemisch aus überwiegend sekundären Natriumalkansulfonaten mit einer mittleren Kettenlänge von C15, 18,9 kg Allylmethacrylat (Komponente a13), 1587,6 g n-Butylacrylat (Komponente a11), 30,24 g einer 10 gew.-%igen wässrigen Lösung von Natriumhydroxid in zwei Stufen zugefahren (Stufe 1: 756 g in 0,5 Stunde, Stufe 2: 2571 g in 2,5 Stunden). Der Initiatorzulauf, bestehend aus 261 g einer 4,4 gew.-%igen wässrigen Lösung von Natriumpersulfat wurde gleichzeitig gestartet und kontinuierlich über 3,5 Stunden zudosiert. Anschließend ließ man die erhaltene wässrige Polymerisatdispersion noch 2 Stunden bei 60 °C nachreagieren. Anschließend wurde die wässrige Polymerisatdispersion auf Raumtemperatur abgekühlt und über ein 1000 Mikrometer-Filter abgelassen. Die wässrige Polymerisatdispersion wies einen Feststoffgehalt von 35,5 Gew.-%, bezogen auf das Gesamtgewicht der wässrigen Dispersion, auf. Die Glasübergangstemperatur des Polymerisats betrug -49 °C.

Der Feststoffgehalt wurde bestimmt, indem eine definierte Menge der wässrigen Polymerisatdispersion (ca. 5 g) bei 140 °C in einem Trockenschrank bis zur Gewichtskonstanz getrocknet wurde. Es wurden zwei separate Messungen durchgeführt. Der im Beispiel angegebene Wert stellt den Mittelwert der beiden Messergebnisse dar.

Die Bestimmung der Glasübergangstemperatur erfolgte gemäß DIN 73765 mittels eines DSC 820-Geräts, Serie TA 8000 der Fa. Mettler-Toledo.

### Herstellung der Propfgrundlage V-a1 (zum Vergleich):

### (ohne Zusatz von Olefin)

In einem 10 I-Vierhalskolben, ausgerüstet mit einem Anker-Rührer, Rückflusskühler und zwei Dosiereinrichtungen wurden unter Stickstoffatmosphäre 2314 g entionisiertes Wasser, 23,4 g einer wässrigen n-Butylacrylatsaat (Feststoffgehalt 40,4 Gew.-%, zahlenmittlerer Teilchendurchmesser 85 nm), 7,18 g Natriumbicarbonat und 5,67 g Kaliumpersulfat vorgelegt und unter Rühren auf 60 °C aufgeheizt. Beginnend bei 60 °C wurde der Monomerzulauf, bestehend aus 18,9 g Allylmethacrylat (Komponente a13) und 1871,1 g n-Butylacrylat (Komponente a11), kontinuierlich in 3,5 Stunden zugefahren. Der Seifezulauf, bestehend aus 497 g einer 2,3 gew.-%igen wässrigen Lösung eines Emulgators aus einem Gemisch aus überwiegend sekundären Natriumalkansulfonaten mit einer mittleren Kettenlänge von C15, wurde gleichzeitig gestartet und kontinuierlich über 3,5 Stunden zudosiert. Anschließend ließ man die erhaltene wässrige Polymerisatdispersion noch 2 Stunden bei 60 °C nachreagieren. Anschließend wurde die wässrige Polymerisatdispersion auf Raumtemperatur abgekühlt und über ein 1000 Mikrometer-Filter abgelassen. Die wässrige Polymerisatdispersion wies einen Feststoffgehalt von 39,8 Gew.-%, bezogen auf das Gesamtgewicht der wässrigen Dispersion, auf. Die Glasübergangstemperatur des Polymerisats betrug -48 °C.

Der Feststoffgehalt und die Glasübergangstemperatur wurden wie zur Herstellung der Pfropfgrundlage a1 beschrieben bestimmt

### Herstellung der Pfropfcopolymerisate A bzw. V-A (zum Vergleich):

In einem 10 I-Vierhalskolben, ausgerüstet mit einem Anker-Rührer, Rückflusskühler und zwei Dosiereinrichtungen wurden unter Stickstoffatmosphäre 2080 g entionisertes Wasser, 4600,5 g einer 35,5 gew.-%igen wässrigen Lösung der vorstehend beschriebenen Pfropfgrundlage a1 bzw. V-a1, 4,4 g Kaliumpersulfat und 7,4 g einer 40 gew.-%igen wässrigen Lösung eines Emulgators aus einem Gemisch aus überwiegend sekundären Natriumalkarisulfonaten mit einer mittleren Kettenlänge von C15 vorgelegt und unter Rühren auf 60 °C aufgeheizt. Beginnend bei 60 °C wurde ein erster Monomerzulauf, bestehend aus 354 g Styrol, kontinuierlich über 1 Stunde zudosiert. Anschließend ließ man die erhaltene wässrige Polymerisatdispersion 30 Minuten nachreagieren. Anschließend wurde ein zweiter Monomerzulauf, bestehend aus 551 g Styrol und 184 g Acrylnitril, kontinuierlich über 2 Stunden zudosiert. Anschließend wurde die Temperatur auf 65 °C erhöht und ließ man die erhaltene wässrige Polymerisatdispersion 2 Stunden nachreagieren.

Danach wurde die wässrige Polymerisatdispersion auf Raumtemperatur abgekühlt und über ein 1000 Mikrometer-Filter abgelassen. Die wässrige Polymerisatdispersion wies einen Feststoffgehalt von 34,6 Gew.-%, bezogen auf das Gesamtgewicht der wässrigen Dispersion, auf.

Die bei den jeweiligen Pfropfmischpolymerisationen erhaltenen Pfropfcopolymerisate A bzw. V-A wurden dann mittels einer 1 gew.-%igen Magnesiumsulfatlösung aus den Dispersionen ausgefällt, abgetrennt, mit Wasser gewaschen und im warmen Luftstrom getrocknet. Der Pfropfgrad der Pfropfcopolymerisate wurde jeweils zu 40 % ermittelt, die mittlere Teilchengröße d₅₀ (Gewichtsmittel) betrug jeweils 570 nm.

### Herstellung der thermoplastischen Copolymere B:

Ein Monomeren-Gemisch aus Styrol und Acrylnitril wurde unter üblichen Bedingungen in Lösung polymerisiert. Das erhaltene Styrol/Acrylnitril-Copolymerisat B hatte einen Acrylnitril-Gehalt von 35 Gew.-%, bezogen auf das Copolymerisat, und eine Viskositätszahl VN von 80 ml/g.

### Herstellung von Formmassen und Formkörpern:

Die Komponenten A (70 Gew.-%) bzw. V-A und B (30 Gew.-%) wurden in einem Zweischnecken-extruder ZSK30 von Fa. Werner & Pfleiderer bei 240 bis 290 °C homogenisiert und in ein Wasserbad extrudiert. Die Extrudate wurden granuliert und getrocknet. Aus den Granulaten stellte man auf einer Spritzgussmaschine bei 280 °C Schmelztemperatur und 60 °C Werkzeugoberflächentemperatur Prüfkörper her und bestimmte die in Tabelle 1 genannten Eigenschaften.

**Tabelle 1:**

| | **Beispiel (erfindungsgemäß)** | **Vergleich** |
|---|---|---|
| **Gelbwert** | 19,3 | 22,3 |
| **Schlagzähigkeit (23 °C) [kJ/m²]** | 233 | 80 |
| **Schlagzähigkeit (-30 °C) [kJ/m²]** | 82 | 50 |
| **Kerbschlagzähigkeit (23 °C) [kJ/m²]** | 10,5 | 7,8 |
| **E-Modul [Mpa]** | 2511 | 2395 |
| **Reißdehnung [%]** | 9,0 | 9,7 |

Es wurden die folgenden Messmethoden verwendet:

### Schlagzähigkeit aₙ [kJ/m²]

Die Schlagzähigkeit aₙ wurde gemäß ISO 179 leU bei 23 °C und -30 °C bestimmt.

### Kerbschlagzähigkeit aₖ [kJ/m²]

Die Kerbschlagzähigkeit aₖ wurde gemäß ISO 179 1eA(F) bei 23 °C bestimmt.

### Elastizitätsmodul [Mpa]

Die Steifigkeit als Elastizitätsmodul (E-Modul) wurde im Zugversuch bei einer Zuggeschwindigkeit von 1 mm/min bei 23 °C nach ISO 527 bestimmt.

### Reißdehnung

Die Reißdehnung (Bruchdehnung) wurde im Zugversuch bei einer Zuggeschwindigkeit von 50 mm/min bei 23°C nach ISO 527 bestimmt.

### Gelbwert

Der Gelbwert wurde gemäß DiN 53236 bestimmt.

## Patentansprüche

1. Thermoplastische Formmasse, enthaltend ein Pfropfcopolymer A und ein thermoplastisches Copolymer B in folgenden Gewichtsanteilen:
A: 10 bis 80 Gew.-% des Pfropfcopolymers A aus
a1: 30 bis 90 Gew.-% bezogen auf das Pfropfcopolymer A einer Pfropfgrundlage a1 erhältlich durch die Umsetzung von
a11: 50 bis 98,99 Gew.% bezogen auf die Pfropfgrundlage a1 eines C₁-C₁₀ - Alkylesters der Acrylsäure,
a12: 1 bis 49,99 Gew.-% bezogen auf die Pfropfgrundlage a1 eines copolymerisierbaren linearen, verzweigten oder cyclischen Olefins mit 3, 4 oder 5 bis 12 C-Atomen, und
a13: 0,01-10 Gew.% bezogen auf die Pfropfgrundlage a1 einer copolymerisierbaren polyfunktionellen, vernetzend wirkenden Verbindung, wobei die Summe a11 + a12 + a13 100 Gew-% ergibt; und
a2: 10 bis 70 Gew.-% bezogen auf das Pfropfcopolymer A einer Pfropfauflage a2;
wobei die Gesamtsumme aus Pfropfgrundlage a1 und Pfropfauflage a2 100 Gew-% ergibt; und
B: 20 bis 90 Gew.-% eines thermoplastischen Copolymers B,
wobei die Summe aus Pfropfcopolymer A und thermoplastischem Copolymer B 100 % ergibt.

2. Thermoplastische Formmassen nach Anspruch 1, wobei als Komponente a12 der Pfropfgrundlage ein copolymerisierbares lineares, verzweigtes oder cyclisches α-Olefin mit 3, 4 oder 5 bis 12 C-Atomen eingesetzt wird.

3. Thermoplastische Formasse nach einem der Ansprüche 1 oder 2, **dadurch gekennzeichnet, dass** die Pfropfauflage a2 in Gegenwart der Pfropfgrundlage a1 hergestellt wird durch Umsetzung von
a21: 60 bis 95 Gew.-% bezogen auf die Pfropfauflage a2 Styrol und/oder α-Methyl-Styrol,
a22: 5 bis 40 Gew.-% bezogen auf die Pfropfauflage a2 Acrylnitril,
a23: 0 bis 35 Gew.-% bezogen auf die Pfropfauflage a2 weiterer ungesättigter Monomere,
wobei die Gesamtsumme von a21 + a22 + a23100 Gew.-% ergibt.

4. Thermoplastische Formmasse nach einem der Ansprüche 1 bis 3, enthaltend die weiteren Komponenten C, D und E in den folgenden Gewichtsanteilen bezogen auf die Summe der Komponenten A und B, wobei A+B = 100 Gew.-% gesetzt werden:
C: 0 bis 90 Gew.-% einer weiteren thermoplastischen Verbindung,
D: 0 bis 50 Gew.-% eines oder mehrerer faser- oder teilchenförmiger Füllstoffe oder Mischungen hiervon und
E: 0 bis 30 Gew.-% üblicher Zusatzstoffe und Verarbeitungshilfsmittel.

5. Thermoplastische Formasse nach einem der Ansprüche 1 bis 4, **dadurch gekennzeichnet, dass** das thermoplastische Copolymer B Poly(styrol-acrylnitril) ist.

6. Thermoplastische Formasse nach einem der Ansprüche 1 bis 5, **dadurch gekennzeichnet, dass** die Komponente a11 n-Butylacrylat ist.

7. Thermoplastische Formmasse nach einem der Ansprüche 1 bis 6, **dadurch gekennzeichnet, dass** die Komponente a12 Propylen ist.

8. Thermoplastische Formmasse nach einem der Ansprüche 1 bis 6, **dadurch gekennzeichnet, dass** die Komponente a121-Buten oder Isobuten, bevorzugt Isobuten ist.

9. Thermoplastische Formmasse nach einem der Ansprüche 1 bis 8, **dadurch gekennzeichnet, dass** das Pfropfcopolymer A durch Emulsionspolymerisation hergestellt wird.

10. Verwendung des Copolymers erhalten aus der Umsetzung von
a11: 50 bis 98,99 Gew.% eines C₁-C₁₀- Alkylesters der Acrylsäure,
a12: 1 bis 49,99 Gew.-% eines copolymerisierbaren linearen, verzweigten oder cyclischen Olefins mit 3, 4 oder 5 bis 12 C-Atomen, und
a13: 0,01 bis 10 Gew.% einer copolymerisierbaren polyfunktionellen, vernetzend wirkenden Verbindung,
wobei die Summe aus a11 + a12 + a13 100 Gew-% ergibt;
als Pfropfgrundlage a1 für ein Pfropfcopolymer A zur Schlagzähmodifizierung von Thermoplasten zur Herstellung von Formmassen gemäß Anspruch 1.

11. Verwendung eines Copolymers nach Anspruch 10, wobei als Komponente a12 ein copolymerisierbares lineares, verzweigtes oder cyclisches α-Olefin mit 3, 4 oder 5 bis 12 C-Atomen eingesetzt wird.

12. Verwendung von Formmassen nach einem der Ansprüche 1 bis 11 zur Herstellung von Formkörpern, Halbzeugen, Fasern, Folien oder Schäumen.

13. Formkörper, Halbzeuge, Fasern, Folien oder Schäume enthaltend Formmassen nach einem der Ansprüche 1 bis 11.

## Claims

1. A thermoplastic molding composition, comprising a graft copolymer A and a thermoplastic copolymer B in the following proportions by weight:
A: from 10 to 80% by weight of the graft copolymer A composed of
a1: from 30 to 90% by weight, based on the graft copolymer A, of a graft base a1 obtainable via the reaction of
a11: from 50 to 98.99% by weight, based on the graft base a1, of a C₁-C₁₀-alkyl ester of acrylic acid,
a12: from 1 to 49.99% by weight, based on the graft base a1, of a copolymerizable linear, branched or cyclic olefin having 3, 4, or from 5 to 12 carbon atoms, and
a13: from 0.01 to 10% by weight, based on the graft base a1, of a copolymerizable polyfunctional, crosslinking compound, where the entirety a11 + a12 + a13 gives 100% by weight; and
a2: from 10 to 70% by weight, based on the graft copolymer A, of a graft a2;
where the entirety composed of graft base a1 and graft a2 gives 100% by weight;
and
B: from 20 to 90% by weight of a thermoplastic copolymer B,
where the entirety composed of graft copolymer A and of thermoplastic copolymer B gives 100%.

2. The thermoplastic molding composition according to claim 1, where a copolymerizable linear, branched or cyclic α-olefin having 3, 4, or from 5 to 12 carbon atoms is used as component a12 of the graft base.

3. The thermoplastic molding composition according to claim 1 or 2, wherein the graft a2 is prepared in the presence of the graft base a1 via reaction of
a21: from 60 to 95% by weight, based on the graft a2, of styrene and/or α-methylstyrene,
a22: from 5 to 40% by weight, based on the graft a2, of acrylnitrile,
a23: from 0 to 35% by weight, based on the graft a2, of further unsaturated monomers,
where the entirety of a21 + a22 + a23 gives 100% by weight.

4. The thermoplastic molding composition according to any of claims 1 to 3, comprising the further components C, D and E in the following proportions by weight, based on the entirety of components A and B, where A+B = 100% by weight:
C: from 0 to 90% by weight of a further thermoplastic compound,
D: from 0 to 50% by weight of one or more fibrous or particulate fillers or a mixture thereof and
E: from 0 to 30% by weight of conventional additives and processing aids.

5. The thermoplastic molding composition according to any of claims 1 to 4, wherein the thermoplastic copolymer B is poly(styrene-acrylnitrile).

6. The thermoplastic molding composition according to any of claims 1 to 5, wherein component a11 is n-butyl acrylate.

7. The thermoplastic molding composition according to any of claims 1 to 6, wherein component a12 is propylene.

8. The thermoplastic molding composition according to any of claims 1 to 6, wherein component a12 is 1-butene or isobutene, preferably isobutene.

9. The thermoplastic molding composition according to any of claims 1 to 8, wherein the graft copolymer A is prepared via emulsion polymerization.

10. The use of the copolymer obtained from the reaction of
a11: from 50 to 98.99% by weight of a C₁-C₁₀-alkyl ester of acrylic acid,
a12: from 1 to 49.99% by weight of a copolymerizable linear, branched or cyclic olefin having 3, 4, or from 5 to 12 carbon atoms, and
a13: from 0.01 to 10% by weight of a copolymerizable polyfunctional, crosslinking compound,
where the entirety composed of a11 + a12 + a13 gives 100% by weight;
as graft base a1 for a graft copolymer A for the impact-modification of thermoplastics for the preparation of molding compositions according to claim 1.

11. The use of a copolymer according to claim 10, where a copolymerizable linear, branched or cyclic α-olefin having 3, 4, or from 5 to 12 carbon atoms is used as component a12.

12. The use of molding compositions according to any of claims 1 to 11 for production of moldings, of semifinished products, of fibers, of foils, or of foams.

13. A molding, a semifinished product, a fiber, a foil or a foam comprising molding compositions according to any of claims 1 to 11.

## Revendications

1. Matériau de moulage thermoplastique, contenant un copolymère greffé A et un copolymère thermoplastique B dans les proportions en poids suivantes :
A : 10 à 80 % en poids du copolymère greffé A à base de
a1 : 30 à 90 % en poids par rapport au copolymère greffe A d'une base de greffage a1 pouvant être obtenue par réaction de
a11 : 50 à 98,99 % en poids par rapport à la base de greffage a1 d'un ester alkylique en C₁-C₁₀ de l'acide acrylique,
a12 : 1 à 49,99 % en poids par rapport à la base de greffage a1 d'une oléfine linéaire, ramifiée ou cyclique copolymérisable qui contient 3, 4 ou 5 à 12 atomes C et
a13 : 0,01 à 10 % en poids par rapport à la base de greffage a1 d'un composé polyfonctionnel copolymérisable à action réticulante,
la somme a11 + a12 + a13 représentant 100 % en poids ; et
a2 : 10 à 70 % en poids par rapport au copolymère greffé A d'un revêtement de greffage a2 ;
la somme totale de la base de greffage a1 et du revêtement de greffage a2 représentant 100 % en poids ; et
B : 20 à 90 % en poids d'un copolymère thermoplastique B,
la somme du copolymère greffé A et du copolymère thermoplastique B représentant 100 %.

2. Matériaux de moulage thermoplastiques selon la revendication 1, dans lesquels une a-oléfine linéaire, ramifiée ou cyclique copolymérisable qui contient 3, 4 ou 5 à 12 atomes C est utilisée en tant que composant a12 de la base de greffage.

3. Matériau de moulage thermoplastique selon l'une quelconque des revendications 1 ou 2, **caractérisé en ce que** le revêtement de greffage a2 est fabriqué en présence de la base de greffage a1 par réaction de
a21 : 60 à 95 % en poids par rapport au revêtement de greffage a2 de styrène et/ou d'a-méthyl-styrène,
a22 : 5 à 40 % en poids par rapport au revêtement de greffage a2 d'acrylonitrile,
a23 : 0 à 35 % en poids par rapport au revêtement de greffage a2 de monomères insaturés supplémentaires,
la somme totale de a21 + a22 + a23 représentant 100 % en poids.

4. Matériau de moulage thermoplastique selon l'une quelconque des revendications 1 à 3, contenant les composants C, D et E supplémentaires dans les proportions en poids suivantes par rapport à la somme des composants A et B, A + B = 100 % en poids étant fixé :
C : 0 à 90 % en poids d'un composé thermoplastique supplémentaire,
D : 0 à 50 % en poids d'une ou de plusieurs charges fibreuses ou particulaires ou leurs mélanges et
E : 0 à 30 % en poids d'additifs et d'adjuvants de traitement supplémentaires.

5. Matériau de moulage thermoplastique selon l'une quelconque des revendications 1 à 4, **caractérisé en ce que** le copolymère thermoplastique B est le poly(styrène-acrylonitrile).

6. Matériau de moulage thermoplastique selon l'une quelconque des revendications 1 à 5, **caractérisé en ce que** le composant a11 est l'acrylate de n-butyle.

7. Matériau de moulage thermoplastique selon l'une quelconque des revendications 1 à 6, **caractérisé en ce que** le composant a12 est le propylène.

8. Matériau de moulage thermoplastique selon l'une quelconque des revendications 1 à 6, **caractérisé en ce que** le composant a12 est le 1-butène ou l'isobutène, de préférence l'isobutène.

9. Matériau de moulage thermoplastique selon l'une quelconque des revendications 1 à 8, **caractérisé en ce que** le copolymère greffé A est fabriqué par polymérisation en émulsion.

10. Utilisation du copolymère obtenu par réaction de
a11 : 50 à 98,99 % en poids d'un ester alkylique en C₁-C₁₀ de l'acide acrylique,
a12 : 1 à 49,99 % en poids d'une oléfine linéaire, ramifiée ou cyclique copolymérisable qui contient 3, 4 ou 5 à 12 atomes C et
a13 : 0,01 à 10 % en poids d'un composé polyfonctionnel copolymérisable à action réticulante,
la somme a11 + a12 + a13 représentant 100 % en poids ;
en tant que base de greffage a1 pour un copolymère greffé A destiné à la modification de la résistance aux impacts de thermoplastiques pour la fabrication de matériaux de moulage selon la revendication 1.

11. Utilisation d'un copolymère selon la revendication 10, dans laquelle une a-oléfine linéaire, ramifiée ou cyclique copolymérisable qui contient 3, 4 ou 5 à 12 atomes C est utilisée en tant que composant a12.

12. Utilisation de matériaux de moulage selon l'une quelconque des revendications 1 à 11 pour la fabrication de corps moulés, de produits semi-finis, de fibres, de films ou de mousses.

13. Corps moulés, produits semi-finis, fibres, films ou mousses contenant des matériaux de moulage selon l'une quelconque des revendications 1 à 11.
